# EUROPÄISCHE PATENTSCHRIFT

(11) **EP 0 774 400 B1**
(45) Veröffentlichungstag und Bekanntmachung des Hinweises auf die Patenterteilung: **11.07.2001**
(21) Anmeldenummer: 96117899.3
(22) Anmeldetag: 08.11.1996
(51) Int. Cl.: B62D 24/02

(54) **Fussboden für Fahrzeuge**
Floor for vehicles
Plancher pour véhicules

(30) Priorität: 14.11.1995 DE 19542358
(43) Veröffentlichungstag der Anmeldung: 21.05.1997
(73) Patentinhaber: DaimlerChrysler AG, 70546 Stuttgart (DE)
(72) Erfinder: Fischer, Helmut, 12353 Berlin (DE); Cramer, Ulrich, 10555 Berlin (DE)
(74) Vertreter: Luderschmidt, Schüler & Partner GbR

(56) Entgegenhaltungen:
- EP-A- 0 576 394
- CH-A- 664 804
- GB-A- 253 250
- US-A- 4 532 672

## Beschreibung

Die Erfindung betrifft einen Fußboden für Fahrzeuge, insbesondere Fahrzeuge für den Personentransport, wie Personenwaggons und Busse, mit einem mit dem Fahrzeug fest verbundenen Unterboden, auf welchem der Fußboden unter Zwischenfügung von Stützelementen aufgebaut ist, welche am Unterboden verankert sind, wobei jedes Stützelement von einem Aufhahmeelement und einem Federelement gebildet ist, welche einstellbar miteinander im Eingriff sind.

Es ist bekannt, bei der Verlegung von Fußböden in Fahrzeugen zum Ausgleich von Unebenheiten des sogenannten Unterbodens Unterkonstruktionen vorzusehen, welche vorzugsweise unter Verwendung von Leisten und Keilen als Stützelemente so angeordnet werden, daß der darauf aufgebaute endgültige Fußboden sowohl eben als auch waagrecht ausgerichtet ist. Diese bekannte Art des Niveauausgleichs ist relativ arbeitsintensiv, da sowohl die für die Herstellung der Stützelemente erforderlichen Ausgleichskeile und Tragleisten angepaßt als auch anschließend miteinander verbunden und ausgerichtet werden müssen.

In der GB-A-0 253 250 ist eine Vorrichtung zum Verhindern von Schwingungen in einem Wagenaufbau eines Fahrzeugs mit einem Stützelement beschrieben, das den Wagenaufbau mit einem Fahrgestell des Fahrzeugs federnd und justierbar verbindet. Das Stützelement weist eine kreisförmige Platte auf, die eine ebene Auflagefläche für ein zylindrisches Federelement aus Gummi bildet, und ist an der Unterseite eines überhängenden Bodenabschnitts des Wagenaufbaus angebracht. Ferner ist ein Sicherungsbolzen durch den Boden des Wagenaufbaus, das Gummielement und die Stützplatte geführt. Durch Drehen einer Einstellmutter am Kopf des Bolzens ist es möglich, die Höhe des Federelementes bezüglich des Fahrgestellrahmens einzustellen und somit Verformungen und Unebenheiten an dem überhängenden Bodenabschnitt des Wagenaufbaus auszugleichen. Weiterhin können in dem Wagenaufbau auftretende Schwingungen über das Federelement gedämpft werden. Der Fachmann entnimmt dieser Druckschrift, daß durch das Vorsehen eines federnden und einstellbaren Stützelementes an überhängenden Bodenabschnitten des Wagenaufbaus Schwingungen im Wagenaufbau gedämpft und Verformungen oder Belastungen an den überhängenden Bodenabschnitten ausgeglichen werden können. Eine Anregung dahingehend, auf welche Weise Unebenheiten des Unterbodens über die gesamte Fläche des Fahrzeugbodens ausgeglichen werden können und dadurch auch eine sehr gleichmäßige Lastabtragung über den Fußboden ermöglicht werden kann, wird nicht vermittelt.

Die Aufgabe der vorliegenden Erfindung besteht somit darin, einen Fußboden zu schaffen, der auf einfache Weise schnell und dauerhaft hergestellt werden kann, wobei die Stützelemente so auszubilden sind, daß zur Erreichung des gesetzten Zieles eine besonders flache Konstruktion der Aufnahmeelemente erhalten wird, so daß sie an beliebigen Stellen des Fahrzeugbodens angeordnet werden können.

Diese Aufgabe ist erfindungsgemäß durch die kennzeichnenden Merkmale des Patentanspruchs 1 gelöst. Weitere vorteilhafte Ausgestaltungen und Verbesserungen der Erfindung sind in den Unteransprüchen angegeben.

Gemäß der Erfindung ist dementsprechend vorgesehen, daß das Aufhahmeelement mit angeschrägten Auflageflächen versehen ist, auf denen sich das zugeordnete Federelement abstützt.

Dabei ist in Weiterbildung der Erfindung das Aufnahmeelement von einem Topf gebildet, der mit unter einem Winkel α angeschrägten Auflageflächen versehen ist, auf welchen Auflageflächen sich das zugeordnete Federelement abstützt.

Eine zweckmäßige Ausgestaltung der Erfindung ist dadurch gekennzeichnet, daß die Auflageflächen von den Gewindeflanken eines mehrgängigen Innengewindes gebildet sind.

Vorteilhafterweise weist jede der Auflageflächen eine formschlüssig wirksame Markierung auf, welche mit dem zugeordneten Federelement zusammenarbeitet. Hierbei kann dementsprechend vorgesehen sein, daß jede Auflagefläche wenigstens auf ihrer Oberseite in Querrichtung gezahnt oder geriffelt ist.

Wie bereits erwähnt besteht jedes Stützelement aus einem Aufnahmeelement und einem Federelement, wobei in Weiterbildung der Erfindung jedes Federelement mehrteilig ausgeführt ist und wenigstens einen Aufnahmekörper mit unter dem Winkel α angeschrägten Stützflächen und einen hiermit verbundenen Teller zur Aufnahme des Fußbodens aufweist.

Bevorzugterweise ist der Aufnahmekörper des Federelements als Aufnahmering ausgebildet ist, der sich mit seinen Stützflächen auf den als Innengewinde ausgebildeten Auflageflächen des Aufnahmeelements abstützt.

Eine bevorzugte Ausführungsform der Erfindung sieht hierbei vor, daß die Stützflächen jedes Stützkörpers jeweils mit einer Markierung versehen sind, die zu der beim Aufnahmeelement vorgesehenen formschlüssig wirksamen Markierung kompatibel ist und daß ferner jeder Stützkörper eine der Anzahl der am zugeordneten Aufnahmeelement vorgesehenen Auflageflächen entsprechende Anzahl von Stützflächen aufweist.

Um die Geräuschentwicklung beim Begehen des fertigen Fußbodens möglichst gering zu halten ist zur Verbindung jedes Stützkörpers mit dem zugeordneten Teller ein Dämpfungselement vorgesehen. Als Material für das Dämpfungselement ist vorzugsweise ein Elastomer vorgesehen.

Das Dämpfungselement gemäß dieser Weiterbildung der Erfindung ist günstigerweise ringförmig ausgebildet und zwischen dem Stützkörper und dem Teller angeordnet.

Gemäß einer zweckmäßigenAusgestaltung der Erfindung ist das Dämpfungselement aus Elastomeren unterschiedlicher Härte zusammengesetzt und kann zum Beispiel durch Vulkanisieren mit dem Stützkörper und dem Teller verbunden sein.

Eine weitere Ausführungsform der Erfindung sieht vor, daß das Aufnahmeelement formschlüssig mit dem Unterboden verbunden ist. Zu diesem Zweck sind am Unterboden wenigstens zwei Schienen vorgesehen, welche zur Verankerung der Aufnahmeelemente dienen und vorzugsweise hakenförmig profiliert sind, wobei sie jeweils mit ihren abgewinkelten freien Kanten die jeweils zugeordneten Aufnahmeelemente übergreifen und in ihrer Position halten.

Eine bevorzugte Ausgestaltung der Erfindung sieht vor, daß die Aufnahmeelemente einen Abstand von 350 mm bis 550 mm aufweisen. Vorzugsweise haben sie einen mittleren Abstand entsprechend einer Stützweite von 440 mm zueinander.

Dabei weist jeder Teller eines Federelements einen Durchmesser von 50 bis 120 mm, vorzugsweise von 80 mm, auf.

Diese und weitere vorteilhafte Ausgestaltungen und Verbesserungen der Erfindung sind Gegenstand der Unteransprüche.

Anhand eines in der schematischen Zeichnung gezeigten Ausführungsbeispiels sollen die Erfindung, vorteilhafte Ausgestaltungen und Verbesserungen der Erfindung sowie besondere Vorteile der Erfindung näher erläutert und beschrieben werden.

Es zeigen:
- Fig. 1: einen Querschnitt durch einen Fußboden eines Fahrzeugs gemäß der Erfindung mit einem Stützelement,
- Fig. 2: eine Draufsicht auf die Anordnung gemäß Fig. 1 mit dem aus einem Aufnahmeelement und einem Federelement gebildeten Stützelement,
- Fig. 3a: ein Aufnahmeelement gemäß der Erfindung,
- Fig. 3b: eine Schnittansicht des Aufnahmeelements gemäß Fig. 3a entlang der Schnittlinie III - III,
- Fig. 3c: eine Einzelheit "X" des Aufnahmeelements gemäß Fig. 1 in vergrößerter Wiedergabe,
- Fig. 4: ein Federelement gemäß der Erfindung in Draufsicht,
- Fig. 5: das Federelement gemäß Fig. 4 in Seitenansicht,
- Fig. 6: das Federelement gemäß Fig. 5 im Längsschnitt,
- Fig. 7: das Aufnahmeelement gemäß Fig. 3 im Längsschnitt von der Seite und
- Fig. 8: ein komplettes aus Aufnahmeelement und Federelement bestehendes Stützelement in Draufsicht.

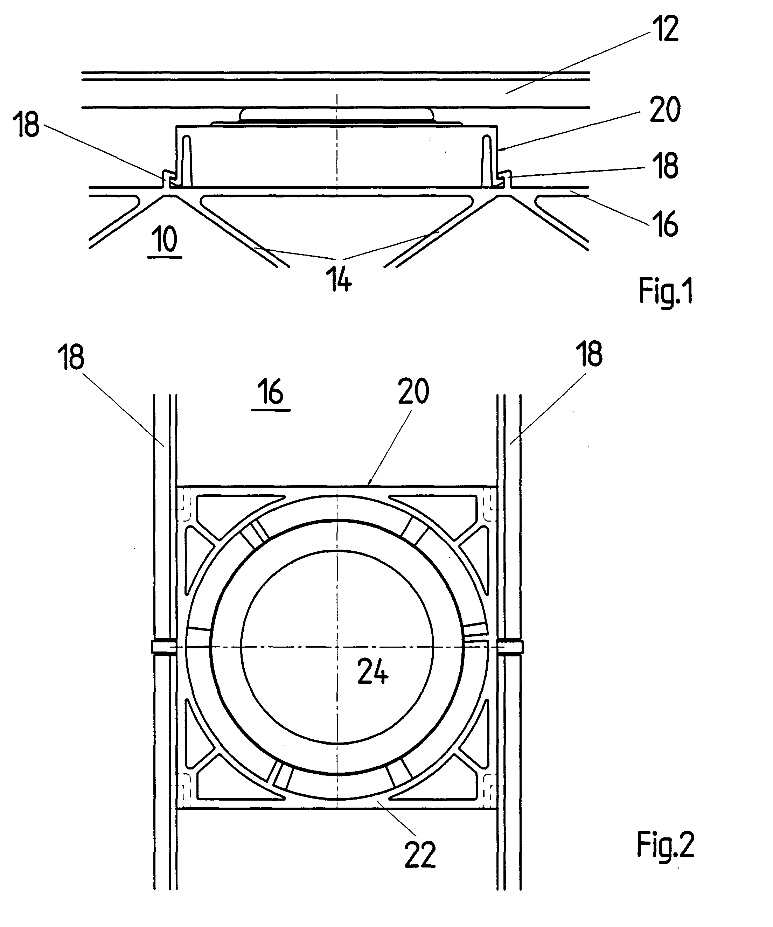

In Fig. 1 ist der untere Teil eines Fahrzeugs 10 mit einem Fußboden 12 im Querschnitt gezeigt, wobei insbesondere die Gestaltung des Fußbodens 12 deutlich zu erkennen ist. Auf einen ebenen, mit Versteifungsrippen 14 versehenen Fahrzeugboden 16 ist ein in Schienen 18 geführtes Stützelement 20 abgestützt, auf welchem wiederum der Fußboden 12 aufliegt.

Wie aus der darunter in Fig. 2 gezeigten Draufsicht erkennbar ist, hat das Stützelement 20 einen quadratischen Grundriß Das Stützelement 20 ist zweiteilig ausgebildet und besitzt ein quadratisches Aufnahmeelement 22, in welchem ein kreisförmiges sogenanntes Federelement 24 angeordnet ist.

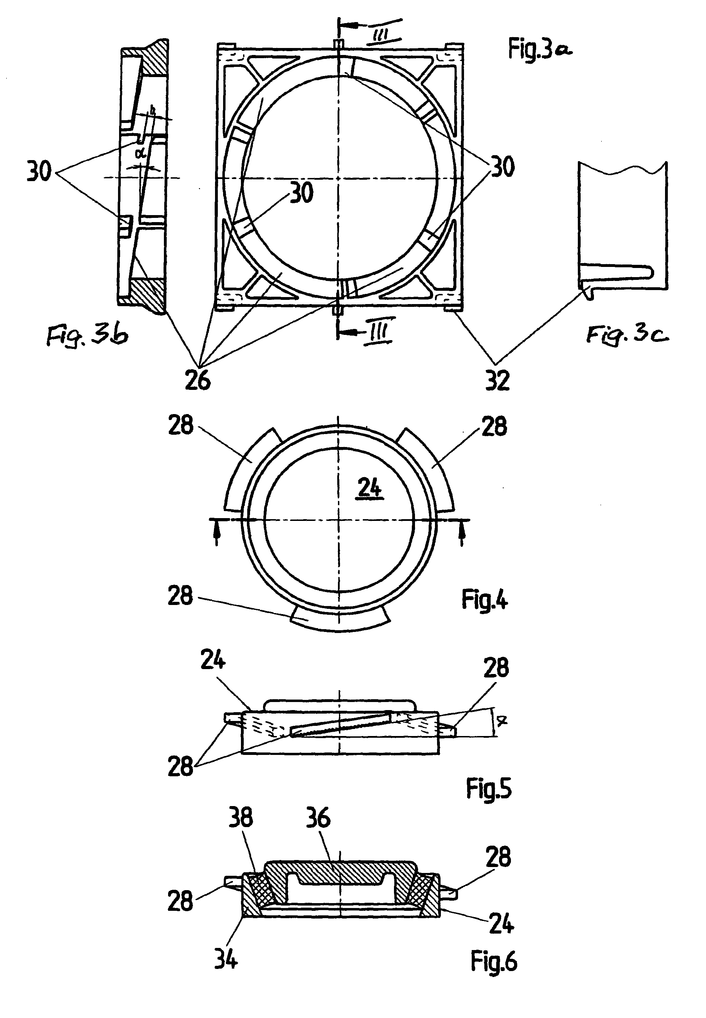

Wie aus den weiteren Figuren , insbesondere Fig. 3a und Fig 4, ersichtlich ist, weist das Aufnahmeelement 22 eine schraubenförmig, das heißt mit einer Neigung, ausgebildete Auflagefläche 26 für das Federelement 24 auf, welches sich mit bajonettartigen Vorsprüngen 28 darauf abstützt und von entsprechenden Sperrelementen 30 am Aufnahmeteil 22 gehalten ist. Die schraubenförmige Aufnahmefläche 26 hat eine Steigung entsprechend einem Winkel α, dessen Wert vorzugsweise ≤ 20° beträgt. Hierdurch ist ein unterschiedliches Höhenniveau des Federelements 24 einstellbar.

An den Eckpunkten des Aufnahmeelements 22 ist jeweils ein Rasthaken 32 angeformt, welcher in Fig. 3c näher gezeigt ist. Diese Rasthaken 32 greifen hinter die Führungsschienen 18 und verrasten dort, wodurch ein Abheben des Aufnahmeelements 22 und somit des Stützelements 20 vom Fahrzeugboden 16 verhindert ist.

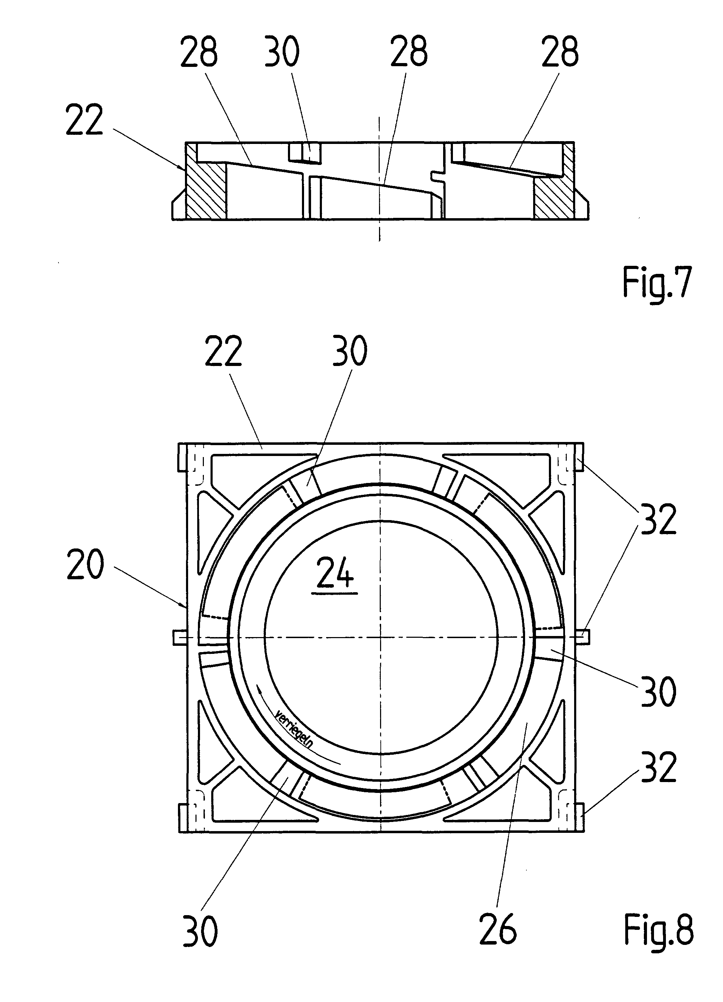

Um eine unerwünschte Lageveränderung des Federelements 24 relativ zum Aufnahmeteil 22 zu verhindern, sind zwei weitere, vorteilhafte Merkmale gemäß der Erfindung vorgesehen, die insbesondere in Fig. 7 erkennbar sind. Zum einen sind die Auflagefläche 26 sowie die an den bajonettartigen Vorsprüngen 28 angeordnete Stützfläche des Federelements 24 mit einer zueinander kompatiblen Oberflächenstruktur versehen, die formschlüssig wirksam ist und ein Abgleiten der Stützfläche an den Vorsprüngen 28 des Federelements 24 auf der Auflagefläche 26 des Aufnahmeelements 22 verhindert. Zum anderen sind zu den bajonettartigen Vorsprüngen 28 am Federelement 24 kompatible Sperrelemente 30 in entsprechendem Abstand am Aufnahmeelement 22 angeordnet, welche ein Abheben des Federelements 24 nach erfolgter Verdrehung verhindert.

In Fig. 5 ist eine Seitenansicht eines Federelements 24 mit teilweisem Längsschnitt gezeigt, woraus ebenfalls der Neigungswinkel α der Stützfläche ersichtlich ist. Ferner ist anhand dieser Darstellung erkennbar, daß die Oberfläche der Stützfläche an den Vorsprüngen 28 mit einer radialen Zahnung versehen ist.

In Fig. 6 ist ein Längsschnitt durch ein erfindungsgemäßes Federelement 24 dargestellt, weches aus einem außenliegenden Aufnahmering 34 besteht, in welchen ein Teller 36 eingesetzt ist, der sich über ein ringförmiges, zwischen dem Aufnahmering 34 und dem Teller 36 eingelegtes Elastomerelement 38 am Aufnahmering 34 abstützt.

In Fig. 8 ist ein komplettes Stützelement 20 mit eingesetztem Federelement 24 dargestellt, wobei der eingezeichnete Pfeil die Drehrichtung zum Verriegeln des Federlements 24 angibt.

Die Aufgabe des Stützelements 20 ist lediglich einen Ausgleich von unvermeidlichen, fertigungsbedingten Unebenheiten des Fahrzeugbodens zu erreichen. An Stelle der seither verwendeten Keile aus Holz oder Kunststoff, deren Lagesicherung eine zusätzliche Fixierung erforderte, wird mit Hilfe des erfindungsgemäßen Stützelements 20 eine einfache einfach herstellbare und leicht montierbare Montagehilfe geboten, welche eine sehr präzise Ausnivellierung des auf dem Fahrzeugboden anzubringenden Fußbodens erlaubt. Außerdem ist durch die exakten Abstände der Stützelemente 20, im Mittel etwa 450 mm, eine sehr gleichmäßige Lastabtragung ermöglicht.

Der konstruktive Grundgedanke des erfindungsgemäßen Stützelements 20 geht aus von einem Gewinde, welches eine stufenlose Höhenanpassung erlaubt. Um die erforderliche Gleithemmung der aufeinanderliegenden Stütz- beziehungsweise Aufnahmeflächen 26 zu gewährleisten, sind die Kontaktflächen mit einer als Zahnung oder Riffelung oder ähnlich gearteten Struktur versehen.

Um eine exakte Lage der einzelnen Stützelemente relativ zueinander zu gewährleisten, sind als Halteprofile mit dem Fahrzeugboden 16 fest verbundene Schienen 18 vorgesehen, in welchen die Stützelemente 20 jeweils eingesetzt und mittels der Rasthaken 32 fixiert werden. Die Länge der geneigten schraubenförmigen Gleitflächen 26 sowie deren Neigung sind so vorgesehen, daß alle auftretenden Unebenheiten ausgeglichen werden können. Nach erfolgter Plazierung und Ausrichtung der Stützelemente 20 kann die Verlegung des Fußbodens 12 erfolgen.

## Patentansprüche

1. Fußboden (12) für Fahrzeuge (10), insbesondere Fahrzeuge für den Personentransport, wie Personenwaggons und Busse, mit einem mit dem Fahrzeug (10) fest verbundenen Unterboden (16), auf welchem der Fußboden (12) unter Zwischenfügung von Stützelementen (20) aufgebaut ist, welche am Unterboden (16) verankert sind, wobei jedes Stützelement (20) von einem Aufnahmeelement (22) und einem Federelement (24) gebildet ist, welche einstellbar miteinander im Eingriff sind, dadurch gekennzeichnet, daß das Aufnahmeelement (22) mit angeschrägten Auflageflächen (26) versehen ist, auf denen sich das zugeordnete Federelement (24) abstützt.

2. Fußboden nach Anspruch 1, dadurch gekennzeichnet, daß das Aufnahmeelement (22) von einem Topf gebildet ist, der mit den unter einem Winkel (α) angeschrägten Auflageflächen (26) versehen ist.

3. Fußboden nach Anspruch 1 oder 2, dadurch gekennzeichnet, daß die Auflageflächen (26) als Gewindeflanken eines mehrgängigen Innengewindes ausgebildet sind.

4. Fußboden nach einem der Ansprüche 1 bis 3, dadurch gekennzeichnet, daß jede der Auflageflächen (26) eine formschlüssig wirksame Oberflächenstruktur aufweist, welche mit dem zugeordneten Federelement (24, 28) zusammenarbeitet.

5. Fußboden nach einem der Ansprüche 1 bis 4, dadurch gekennzeichnet, daß jede Auflagefläche (26) wenigstens auf ihrer Oberseite in Querrichtung gezahnt ist.

6. Fußboden nach einem der Ansprüche 1 bis 4, dadurch gekennzeichnet, daß die Auflageflächen (26) wenigstens auf ihrer Oberseite in Querrichtung geriffelt sind.

7. Fußboden nach einem der Ansprüche 1 bis 6, dadurch gekennzeichnet, daß jedes Federelement (24) mehrteilig ausgeführt ist und wenigstens einen Aufnahmekörper (34) mit unter dem Winkel α angeschrägten Stützflächen (28) und einen hiermit verbundenen Teller (36) zur Abstützung des Fußbodens (12)aufweist.

8. Fußboden nach Anspruch 7, dadurch gekennzeichnet, daß der Aufnahmekörper des Federelements (24) als Aufnahmering (34) ausgebildet ist, der sich mit seinen Stützflächen (28) auf den als Innengewinde ausgebildeten Auflageflächen (26) des Aufnahmeelements (22) abstützt.

9. Fußboden nach Anspruch 8, dadurch gekennzeichnet, daß die Stützflächen (28) jeweils mit einer Markierung versehen sind, die zu der beim Aufnahmeelement (22) vorgesehenen formschlüssig wirksamen Markierung kompatibel ist.

10. Fußboden nach einem der Ansprüche 7 bis 9, dadurch gekennzeichnet, daß jeder Stützkörper (34) eine der Anzahl der am zugeordneten Aufnahmeelement (22) vorgesehenen Auflageflächen (26) entsprechende Anzahl von Stützflächen (28) aufweist.

11. Fußboden nach einem der Ansprüche 1 bis 10, dadurch gekennzeichnet, daß zur Verbindung jedes Stützkörpers (34) mit dem zugeordneten Teller (36) ein Dämpfungselement (38) vorgesehen ist.

12. Fußboden nach Anspruch 11, dadurch gekennzeichnet, daß als Material für das Dämpfungselement (38) ein Elastomer vorgesehen ist.

13. Fußboden nach Anspruch 11 oder 12, dadurch gekennzeichnet, daß das Dämpfungselement (38) ringförmig ausgebildet ist und zwischen dem Stützkörper (34) und dem Teller (36) angeordnet ist.

14. Fußboden nach einem der Ansprüche 11 bis 13, dadurch gekennzeichnet, daß das Dämpfungselement (38) durch Vulkanisieren mit dem Stützkörper (34) und dem Teller (36) verbunden ist.

15. Fußboden nach einem der Ansprüche 11 bis 14, dadurch gekennzeichnet, daß das Dämpfungselement (38) aus Elastomeren unterschiedlicher Härte zusammengesetzt ist.

16. Fußboden nach einem der Ansprüche 1 bis 15, dadurch gekennzeichnet, daß das Aufnahmeelement (22) formschlüssig mit dem Unterboden (16) verbunden ist.

17. Fußboden nach Anspruch 16, dadurch gekennzeichnet, daß am Unterboden (16) wenigstens zwei Schienen (18) vorgesehen sind, welche zur Verankerung der Aufnahmeelemente (22) dienen.

18. Fußboden nach Anspruch 17, dadurch gekennzeichnet, daß die wenigstens zwei Schienen (18) hakenförmig profiliert sind und jeweils mit ihren abgewinkelten freien Kanten die jeweils zugeordneten Aufnahmeelemente )22) übergreifen und in ihrer Position halten.

19. Fußboden nach einem der Ansprüche 1 bis 18, dadurch gekennzeichnet, daß die Stützelemente (20) einen mittleren Abstand von 350 bis 500 mm aufweisen.

20. Fußboden nach einem der Ansprüche 1 bis 19, dadurch gekennzeichnet, daß die Stützelemente (20) einen mittleren Abstand entsprechend einer Stützweite von 440 mm zueinander haben.

21. Fußboden nach einem der Ansprüche 1 bis 20, dadurch gekennzeichnet, daß jeder Teller (36) eines Federelements (24) einen Durchmesser von 50 bis 120 mm, vorzugsweise von 80 mm, aufweist.

## Claims

1. A floor (12) for vehicles (10), particularly vehicles for passenger transportation, such as personnel wagons and buses with a sub-floor (16) rigidly connected to the vehicle (10) and on which the floor (12) is constructed, being supported by intermediate elements (20) which are anchored to the sub-floor (16), each supporting element (20) being formed by a receiving element (22) and a screening element (24) which engage one another in adjustable fashion, characterised in that the receiving element (22) has chamfered supporting surfaces (26), on which the associated spring element (24) is supported.

2. A floor according to claim 1, characterised in that the receiving element (22) is formed by a pot-shaped member provided with supporting surfaces (26) chamfered to an angle (α).

3. A floor according to claim 1 or 2, characterised in that the supporting surfaces (26) are constructed as screw threaded flanks of a multiple female screw thread.

4. A floor according to one of claims 1 to 3, characterised in that each of the supporting surfaces (26) comprises a positively effective surface structure which co-operates with the associated spring element (24, 28).

5. A floor according to one of claims 1 to 4, characterised in that at least the upper surface of each supporting surface (26) is toothed in a transverse direction.

6. A floor according to one of claims 1 to 4, characterised in that at least the upper surface of the supporting surfaces (26) is ribbed in a transverse direction.

7. A floor according to one of claims 1 to 6, characterised in that each spring element (24) is of multi-part construction and comprises at least one receiving member (34) with supporting surfaces (28) chamfered to an angle (α) and a plate (36) connected thereto for supporting the floor (12).

8. A floor according to claim 7, characterised in that the receiving member of the spring element (24) is constructed as a receiving ring (34) of which the supporting surfaces (28) are braced on the supporting surfaces (26) of the receiving element (22) which are constructed as a female screw thread.

9. A floor according to claim 8, characterised in that the supporting surfaces (28) are each provided with a marking compatible with a positively operative mark provided on the receiving element (22).

10. A floor according to one of claims 7 to 9, characterised in that each supporting member (34) has a number of supporting surfaces (28) corresponding to the number of supporting surfaces (26) provided on the associating receiving element (22).

11. A floor according to one of claims 1 to 10, characterised in that a damping element (38) is provided for connecting each supporting member (34) to the associated plate (36).

12. A floor according to claim 11, characterised in that an elastomer is provided as the material for the damping element (38).

13. A floor according to claim 11 or 12, characterised in that the damping element (38) is of annular construction and is disposed between the supporting member (34) and the plate (36).

14. A floor according to one of claims 11 to 13, characterised in that the damping element (38) is connected to the supporting member (34) and the plate (36) by a vulcanising process.

15. A floor according to one of claims 11 to 14, characterised in that the damping element (38) is composed of elastomers of differing hardness.

16. A floor according to one of claims 1 to 15, characterised in that the receiving element (22) is operatively connected to the sub-floor (16).

17. A floor according to claim 16, characterised in that there are on the sub-floor (16) at least two rails (18) which serve to enter the receiving elements (22).

18. A floor according to claim 17, characterised in that the at least two rails (18) have a hook-like profile, their angled-over free edges engaging over the respectively associated receiving element (22) and hold them in position.

19. A floor according to one of claims 1 to 18, characterised in that the supporting elements (22) are spaced apart by an average of 350 to 500 mm.

20. A floor according to one of claims 1 to 19, characterised in that the supporting elements (20) are spaced apart by an average distance corresponding to a supporting width of 440 mm.

21. A floor according to one of claims 1 to 20, characterised in that each plate (36) of a spring element (24) has a diameter of 50 to 120 mm, preferably 80 mm.

## Revendications

1. Plancher (12) pour véhicules (10), en particulier pour des véhicules de transport de personnes, tels que les wagons des trains de voyageurs et des cars, comprenant un fond de caisse (16) assemblé de manière inamovible avec le véhicule (10), sur lequel est monté le plancher (12) en intercalant des éléments de support (20), qui sont ancrés dans le fond de caisse (16), chaque élément de support (20) étant formé par un élément de réception (22) et un élément ressort (24), lesquels entrent en prise de manière réglable, caractérisé en ce que l'élément de réception (22) est muni de surfaces d'appui (26) inclinées, sur lesquelles vient en appui l'élément ressort (24) associé.

2. Plancher selon la revendication 1, caractérisé en ce que l'élément de réception (22) est en forme de cuve qui est munie de surfaces d'appui (26) inclinées selon un angle (α).

3. Plancher selon la revendication 1 ou 2, caractérisé en ce que les surfaces d'appui (26) sont formées par les flancs des filets d'un taraudage multiple.

4. Plancher selon l'une quelconque des revendications 1 à 3, caractérisé en ce que chaque surface d'appui (26) comporte un repère actif par conjugaison de forme, qui agit conjointement avec l'élément ressort (24, 28) associé.

5. Plancher selon l'une quelconque des revendications 1 à 4, caractérisé en ce que chaque surface d'appui (26) est dentée dans le sens transversal, au moins sur sa face supérieure.

6. Plancher selon l'une quelconque des revendications 1 à 4, caractérisé en ce que les surfaces d'appui (26) sont cannelées dans le sens transversal, au moins sur leur face supérieure.

7. Plancher selon l'une quelconque des revendications 1 à 6, caractérisé en ce que chaque élément ressort (24) est conçu en plusieurs parties et comporte au moins un corps de réception (34) muni de surfaces de support (28) inclinées selon un angle (α) et d'un plateau (36) assemblé à celles-ci et destiné à supporter le plancher (12).

8. Plancher selon la revendication 7, caractérisé en ce que le corps de réception de l'élément ressort (24) est conçu en forme de bague de réception (34) dont les surfaces de support (28) viennent en appui sur les surfaces d'appui (26) taraudées de l'élément de réception (22).

9. Plancher selon la revendication 8, caractérisé en ce que les surfaces de support (28) sont munies chacune d'un repère qui est compatible avec le repère actif par conjugaison de forme prévu sur l'élément de réception (22).

10. Plancher selon l'une quelconque des revendications 7 à 9, caractérisé en ce que chaque corps de support (34) comporte un nombre de surfaces de support (28) correspondant au nombre de surfaces d'appui (26) prévues sur l'élément de réception (22) associé.

11. Plancher selon l'une quelconque des revendications 1 à 10, caractérisé en ce qu'il est prévu un élément amortisseur (38) utilisé pour assembler chaque corps de support (34) avec le plateau (36) correspondant.

12. Plancher selon la revendication 11, caractérisé en ce que le matériau prévu pour la fabrication de l'élément amortisseur (38) est un élastomère.

13. Plancher selon la revendication 11 ou 12, caractérisé en ce que l'élément amortisseur (38) est conçu en forme de bague qui est disposée entre le corps de support (34) et le plateau (36).

14. Plancher selon l'une quelconque des revendications 11 à 13, caractérisé en ce que l'élément amortisseur (38) est assemblé par vulcanisation avec le corps de support (34) et le plateau (36).

15. Plancher selon l'une quelconque des revendications 11 à 14, caractérisé en ce que l'élément amortisseur (38) est réalisé dans des élastomères de différentes duretés.

16. Plancher selon l'une quelconque des revendications 1 à 15, caractérisé en ce que l'élément de réception (22) est assemblé par conjugaison de forme avec le fond de caisse (16).

17. Plancher selon la revendication 16, caractérisé en ce qu'il est prévu de poser au moins deux profilés (18) sur le fond de caisse (16), lesquels sont utilisés pour l'ancrage des éléments de réception (22).

18. Plancher selon la revendication 17, caractérisé en ce qu'au moins deux profilés (18) sont profilés en forme de crochet et s'engagent chacun avec leurs bords coudés libres au-dessus des éléments de réception (22) associés et les maintiennent dans leur position.

19. Plancher selon l'une quelconque des revendications 1 à 18, caractérisé en ce que les éléments de support (20) sont écartés les uns des autres d'une distance moyenne de 350 mm à 500 mm.

20. Plancher selon l'une quelconque des revendications 1 à 19, caractérisé en ce que les éléments de support (20) sont écartés les uns des autres d'une distance moyenne correspondant à une largeur de support de 440 mm.

21. Plancher selon l'une quelconque des revendications 1 à 20, caractérisé en ce que chaque plateau (36) d'un élément ressort (24) présente un diamètre de 50 à 120 mm, de préférence 80 mm.
